Europäisches Patentamt

European Patent Office

Office européen des brevets

(11) Publication number: **0 106 628**
**B1**

(12) **EUROPEAN PATENT SPECIFICATION**

(45) Date of publication of patent specification: **07.01.87**

(51) Int. Cl.⁴: **C 09 D 11/10,** B 41 M 1/34

(21) Application number: **83306036.1**

(22) Date of filing: **05.10.83**

(54) Printing ink.

(30) Priority: **08.10.82 GB 8228912**

(43) Date of publication of application:
**25.04.84 Bulletin 84/17**

(45) Publication of the grant of the patent:
**07.01.87 Bulletin 87/02**

(84) Designated Contracting States:
**BE DE FR GB IT LU NL SE**

(56) References cited:
**EP-A-0 052 763**
**DE-A-2 224 277**
**DE-A-2 610 213**
**US-A-4 306 012**

(73) Proprietor: **JOHNSON MATTHEY PUBLIC LIMITED COMPANY**
**43 Hatton Garden**
**London, EC1N 8EE (GB)**

(72) Inventor: **Carter, David**
**24 Ferndown Drive Clayton**
**Newcastle-under-Lyme Staffordshire (GB)**

(74) Representative: **Arthur, Bryan Edward et al**
**Withers & Rogers 4 Dyer's Buildings Holborn**
**London EC1N 2JT (GB)**

Courier Press, Leamington Spa, England.

**0 106 628**

**Description**

This invention relates to radiation-curable and firable printing inks.

Printing inks are used inter alia in the ceramic trade for the decoration of ceramic ware, vitreous ware and metallic substrates. Decoration may be either direct (by applying a pattern in ink on the surface of the ware by screen printing, offset printing or other direct application technique) or indirect (by applying a pattern to a decalcomania substrate for later transfer to the ware). Typically, either air-drying or thermoplastic vehicles are used in inks for the decoration of ceramic ware whereas thermoplastic vehicles only are used for the decoration of vitreous ware. The decorated ware or substrate is then fired to burn off the organic components of the ink and to fuse the vitreous components.

In both direct and indirect processes using air-drying inks (by which is meant inks which dry by auto-oxidation, evaporation and so on), and following application of the ink to the substrate, a drying or hardening stage is required before the substrate can be further handled. Further handling is required in, for example, stacking, overprinting, glazing or firing or, in the case of transfers, stacking for storage, application to the ware, overprinting and the like. Using thermoplastic inks, the need for a drying stage is avoided but this advantage is counter balanced by the need to use heated printing equipment. Furthermore, thermoplastic inks give rise to problems on subsequent firing in that they tend not to burn away cleanly.

The currently employed methods of applying a pattern to ceramic, vitreous and metallic substrates are therefore time and/or energy-intensive and in consequence are expensive to operate. Furthermore, factory space is taken up for either natural or accelerated drying operations. Even further, the applied film, prior to firing, is not durable and is extremely susceptible to damage caused by rubbing, scratching and the like which easily occurs during ordinary handling operations.

It has in the past been proposed to apply an ink film which is curable on exposure to radiation, thereby avoiding the expense of the currently employed methods. It was thought that such an ink would be rendered dry and durable, and hence suitable for further handling, on brief exposure to a source of radiation, preferably ultra-violet radiation for economy. Systems proposed hitherto have been mainly based on radiation-curable resins but these have formed rigid three-dimensional cross-linked structured films on exposure to radiation. Such films, on firing, do not allow volatiles to escape without causing blistering and are subject to charring and volume shrinkage on the ware. This is particularly the case when the films are subjected to fast-firing schedules such as are used in the production of windscreens for cars and other vehicles. Such schedules, which are designed for simultaneously toughening the glass and, where desired, curving it as well as for firing on any ink film, typically employ very fast heating rates in considerable excess of 100°C per minute. Firing problems are also enhanced where high film thicknesses of ink are used.

A further disadvantage of some known radiation-curable systems is that they include materials the use of which is not recommended on grounds of health and safety.

In an attempt to overcome the disadvantages of such various prior art systems, European patent applications No. 52763 and 52764 (Agrob Anlagenbau GmbH) disclose procedures for the direct printing of ceramic colours on glass, ceramic or metal substrates and for the production of transfers, respectively, wherein printing agents are used to provide a colour paste, the printing agents comprising prepolymers of polyfunctional acrylate resins, (preferably acrylated polyesters), the corresponding mono, di and trifunctional acrylates, polymethyl-methacrylate of definite polymerisation grades, and a photoinitiator.

We have now found that a radiation-curable ink which gives acceptable curing and firing properties may be based on a vehicle comprising a fully-polymerised thermoplastic resin and a radiation-curable diluent, and that prepolymers of polyfunctional acrylate resins such as acrylated polyesters can be omitted and the firing properties of the cured ink are thereby improved, particularly in fast-firing schedules.

According to the present invention, therefore, we provide a radiation-curable and firable printing ink which comprises a colouring material and a medium therefor, wherein the medium consists essentially of a substantially fully-polymerised thermoplastic resin, a radiation-curable diluent and a photoinitiator.

The colouring material is either a particulate or flake metal or an enamel colour. In the ceramic art, the term "enamel colour" is understood to mean a dry particulate mixture of one or more pigments and a vitreous frit and any such enamel can be used with equal effectiveness in printing inks according to this invention, provided that the frit is molten at the peak firing temperature. The temperature at which the frit begins to sinter may influence the choice of resin and diluent since it is undesirable for organic components to burn off through the molten frit. The nature and amount of the frit and of the pigment may also influence the choice and amount of photoinitiator, since different frits and pigments have different radiation-absorbing and/or scattering properties. Metals, for example precious metals, such as silver or gold, may be used for decorative purposes or for applying an electrically-conductive film to a substrate.

The thermoplastic resin should be substantially fully polymerised so that no further polymerisation or other chemical reaction occurs on exposure to radiation and should give good application properties to the printing ink. The resin should preferably be a solid at ordinary room temperatures (up to about 25°C) although resins which are liquid at room temperature may be used. The resin should on heating depolymerise and revert to the parent monomer or at least to a low molecular weight oligomer thereof. The parent monomer (or oligomer thereof) should volatilise so that, on heating to 450°C in air, not less than

2

about 80% of the fully polymerised thermoplastic resin is volatilised. We have found that a resin which meets this criterion is sufficiently volatile to be compatible with most firing schedules presently in use in the art. It is in other words a useful guide target for practical utility. A further requirement is that the resin should exhibit low volume shrinkage on firing to avoid distortion of the film. Furthermore, it is preferred, especially where the enamel is of a pale colour, that there should be little or no residue remaining on completion of the firing cycle. This preferred requirement indicates a preference for a free-radical polymer since such a polymer is devoid of additives such as, for example, Ziegler-type catalysts.

Examples of the types of resin which we have found to be useful include acrylics, hydrocarbon resins, ketone resins, cellulose resins and rosin derivatives. Examples of acrylics (which are the preferred type of resin) which are solid at room temperature are polymethyl-methacrylate and polybutylmethacrylate, whereas polymethylhexylmethacrylate, for example, is liquid at room temperature. These are homopolymers. Co-polymers of these monomers or with other monomers such as methacrylic acid and ethyl acrylate may be desirable for some applications. Examples of hydrocarbon resins are polystyrene and polymers of α-methyl styrene and vinyl toluene.

We have found that a good general-purpose resin which appears to give good application properties irrespective of the nature of the ceramic colour comprises a co-polymer of methyl methacrylate and butyl methacrylate.

The radiation-curable diluent acts as a solvent for the thermoplastic resin before curing but should not react chemically with it. It should itself be resin-free and be of low viscosity, so that the solution with the thermoplastic resin imparts to the ink a suitable viscosity to enable it to be screen printed or otherwise applied as a film to the substrate. To enable the ink to remain at a suitable viscosity on storage and/or during application, and also on health and safety grounds, the diluent should be relatively involatile at least at ordinary room temperatures and should preferably have a boiling point at atmospheric pressure of not less than about 150°C. This results in the ink, as applied to the substrate and before being fired, having a higher organic content than is the case with air-drying inks, the diluent cross-linking on being cured rather than being evaporated. The cured film thickness is therefore substantially the same as the film thickness before curing, the latter being termed the "wet" film thickness. The diluent must be susceptible to free radical polymerisation and therefore should contain ethylenic unsaturation, preferably as vinyl groups either in an aliphatic moiety or as an aromatic side chain moiety. The diluent may for example be a monofunctional or polyfunctional acrylate, where the functionality is a measure of the number of acrylate (i.e. vinyl) groups available for polymerisation on curing. The diluent cures on exposure to radiation to give a three dimensional solid matrix holding in frozen suspension the dissolved thermoplastic resin. Preferably the cured ink exhibits a degree of flexibility on the substrate. On firing, the cured diluent burns cleanly away without leaving a residue, despite the high cured film thickness. The thermoplastic resin and the cured diluent should be mutually compatible on firing. We have ·found that the cured diluent behaves satisfactorily on firing with none of the problems associated with prior art radiation-curable inks based on a radiation-curable resin. One or more diluents may be used, for example a mixture of a monofunctional and a polyfunctional diluent.

For satisfactory firing during a fast firing schedule, optionally included as part or all of the diluent component of the ink medium may be a material which imparts less thermal stability to the cured film. Such a material typically contains an ether linkage, and is preferably aliphatic rather than aromatic in character.

Examples of suitable diluents, all containing vinyl groups, are vinyl pyrrolidone, isobornyl acrylate, hexane diol diacrylate, triethylene glycol diacrylate, tripropylene glycol diacrylate, trimethylolpropane triacrylate and pentaerythritol triacrylate. Ether linkage-containing materials may comprise alkoxylated derivatives of vinyl diluents such as monofunctional and polyfunctional acrylates. An example is propoxylated glycerol triacrylate.

The photoinitiator may be selected from any of such compounds known in the art, especially carbonyl compounds such as ketones and derivatives thereof. Examples of suitable ketones include methyl ethyl ketone and benzophenone and a suitable and preferred ketone derivative is benzyl dimethyl ketal. Proprietary compounds or compositions sold for this purpose may be suitable, for example "Irgacure" 651, available from Ciba-Geigy, which is an example of an intramolecular photoinitiator. Further, fluorescent compounds may be used as photoinitiator. The purpose of the photoinitiator is to provide, on irradiation, preferably with ultra-violet light, an excited triplet species which tranfers its energy to the diluent to produce a free radical to initiate polymerisation. Further commercially-available photoinitiators include "Quantacure" ITX and CTX. These are intermolecular photoinitiators which have to be used together with hydrogen donors such as "Quantacure" BEA and DMB, (available from Ward Blenkinsop). One or more photoinitiators may be used together. For example, "Quantacure" BEA and ITX may be used together with "Irgacure" 651.

Printing inks according to the invention may contain inessential additives for particular purposes. For example, waxes or silicone oils may be added to increase mar resistance and long chain amines may be added as wetting agents. Such additives should be soluble in the diluent and should be compatible on firing with the other components of the ink. Furthermore, known agents for altering the rheological properties may be added to render the inks more suitable for, for example, offset printing rather than screen printing.

3

Inks according to the invention should contain from 40 to 85% by weight of colouring material, balance (15 to 60%) medium. Preferably, the inks contain from 60 to 80% by weight colouring material, for example 75%, balance medium. Below 40% colouring material, the inks have insufficient opacity whereas at above 85% the viscosity is too high for satisfactory application to the substrate.

The medium should contain from 1 to 80% by weight thermoplastic resin, preferably 5 to 50%, for example 10%, and from 15 to 95% by weight diluent, preferably 45 to 90%, for example 80%. The balance is made up by photoinitiator and additives, the former being present from 0.1 to 25% and the latter being present from 0.1 to 10% by weight, for example 10% of photoinitiator and 5% or less of additive. The nature and amount of photoinitiator is governed by the nature and amount of the pigment and frit and by the required hardness of the cured film. The wavelength of the radiation also influences the photoinitiator. Preferably the radiation is ultra-violet radiation having a peak wavelength of approximately 350 nm. The power depends in part on the curing time which is conveniently geared to the speed of the printing line. As an example, a typical line speed is 6 m min$^{-1}$ and the radation power is 80 watts cm$^{-2}$.

The invention also provides a process for decorating a ceramic, vitreous or metallic substrate comprising applying a decoration in a radiation-curable printing ink, curing the ink by exposure to radiation and thereafter firing the decorated substrate, wherein the ink contains a colouring material and a medium comprising a substantially fully-polymerised thermoplastic resin, a radiation-curable diluent and a photoinitiator, the frit being molten at the peak firing temperature and the resin and cured diluent being fugitive at temperatures lower than the temperature at which the frit begins to sinter. The photoinitiator is preferably selected according to the radiation-absorbing and/or scattering properties of the colouring material so as completely to cure the diluent, the cured diluent thereby forming a three dimensional solid matrix which holds the dissolved thermoplastic resin and colouring material in frozen suspension and burns cleanly away on firing.

The invention further provides a method for applying a mask to a car windscreen, wherein a film of printing ink is applied by screen printing, the ink consisting of an enamel colour and a medium comprising a fully polymerised thermoplastic resin, a photoinitiator and a radiation-curable ethylenically-unsaturated diluent, the film is subject to radiation to cure the diluent, and the windscreen carrying the cured film is subjected to a fast firing schedule in which the heating rate is at least 100°C per minute.

The invention also provides a process for decorating a ceramic, vitreous or metallic substrate by applying a decoration in a radiation-curable printing ink comprising a colouring material and a medium comprising a fully-polymerised thermoplastic resin, a radiation-curable diluent and a photoinitiator to a decalcomania substrate, curing the ink by exposure to radiation, and thereafter transferring the decoration to the ceramic, vitreous or metallic substrate and firing the thus decorated substrate.

Also within the scope of the invention is a decalomania and a process for making a decalomania for applying a decoration to a ceramic, vitreous or metallic substrate, the decalomania comprising a decalomania substrate and a decoration layer, wherein the decoration layer is formed from a radiation-curable printing ink comprising a colouring material and a medium comprising a substantially fully-polymerised thermoplastic resin, a radiation-curable diluent and a photoinitiator, the decoration layer having been exposed to radiation to cure the printing ink.

We have found that printing inks according to the invention can be applied to a substrate, cured and eventually fired to give high quality decoration of a ceramic, vitreous or metallic substrate. We have achieved good results on firing (as well as good curing) at low loadings of colouring material and good results on curing (as well as good firing) at high loadings of colouring material, that is, in excess of 50% by weight and ranging up to as much as 80% or more by weight. The ink may readily be applied by, for example, screen printing, banding or lining, for example by brush or roller, or offset techniques, to transfer substrates, glazed or un-glazed fired ware or dried green ware, and cured by exposure preferably to ultra-violet radiation. Very brief exposure, for example of duration a few seconds or less, is sufficient to effect a satisfactory cure and the resulting film is resistant to damage caused by rubbing, scratching, scuffing and the like. The ware may thereafter be over-printed, glazed, stacked or subjected to other handling or production operations with very little risk, given a reasonable degree of care, of being ultimately rejected as sub-standard. The invention is particularly useful for applying a masking or other layer to glassware subject to fast firing schedules, and where the radiation intensity is very high and/or the exposure duration is very brief. Furthermore, materials used in inks according to the invention are essentially non-toxic and/or relatively involatile and are acceptable on grounds of health and safety.

Printing inks according to the invention may be produced by any of the well-known prior art techniques of dispersion, for example, by passing the ingredients as a pre-mix through a triple roll mill.

The invention will now be described by way of example.

Example 1

A black screen printing ink was formulated by passing through a triple roll mill a mixture of an enamel (75 wt.%) and a medium (25%). The enamel contained a black pigment comprising oxides of Cr, Cu and Mn and a lead borosilicate frit in a proportion by weight of 1:3. The enamel is sold by Blythe Colours Ltd. under number 45E50. The medium had the following composition:—

| | % by weight |
|---|---|
| Fully-polymerised polybutylmethacrylate | 10 |
| Propoxylated glycerol triacrylate (Kunsthars-fabriek Synthese "Setalux" 2250) | 79.8 |
| "Irgacure" 651 (Ciba-Geigy) | 10 |
| "Modaflow" (Monsanto) | 0.2 |
| | 100.0 |

The resulting ink had a viscosity of 50 poise at 25°C and was applied automatically by screen printing (mesh size 100T) at a thickness of 25—30 μm to one side of flat car windscreens around the edge portion thereof. The screen printing line was travelling at a speed of 6 m min$^{-1}$. The windscreens were then passed under a medium pressure mercury vapour lamp giving a power of 80 watt cm$^{-2}$. The resulting cured films had a pencil hardness of 6H. The windscreens were then subjected to a fast-firing schedule to toughen the glass, to impart a curved shape to the glass and to fire on the ink film. The resulting black edge band gave even coverage of good opacity, was free of blistering and had good substrate adhesion, its purpose being to mask cosmetically and against ultra-violet degradation the adhesive used to secure the windscreen in its location in the car body.

Example 2

A black screen printing ink was formulated as in Example 1 using enamel 45E50 (75 wt.%) and the following medium (25 wt.%):—

| | % by weight |
|---|---|
| Fully-polymerised polymethylmethacrylate/ butylmethacrylate | 15 |
| Tripropylene glycol diacrylate | 74.8 |
| ITX) (intermolecular photoinitiators | 5 |
| DMB) ex. Ward Blenkinsop) | 5 |
| "Modaflow" | 0.2 |
| | 100.0 |

The ink was applied to car windscreens as in Example 1, cured and fired. The cured film had more flexibility than that of Example 1.

Example 3

An orange screen printing ink for decoration of ceramic or metallic ware was formulated by triple-rolling a mixture of enamel 44H225 (Blythe Colours) (60 wt.%) and a medium (40 wt.%). The enamel pigment comprises cadmium and selenium in a proportion to frit of 1:12. The medium had the following composition:—

| | % by weight |
|---|---|
| Fully-polymerised polybutylmethacrylate | 20 |
| Tripropylene glycol diacrylate | 72.3 |
| ITX | 2.5 |
| DMB | 5 |
| Silicone oil | 0.2 |
| | 100.0 |

**0 106 628**

Example 4

A brown printing ink for decorative purposes, for example for cooker panels, was formulated by triple-rolling a mixture of enamel 45R595 (Blythe Colours) (80 wt.%) and medium (20 wt.%). The enamel comprises oxides of iron, chromium and zinc in a proportion to frit of 1:5. The medium had the following composition:—

|  | % by weight |
|---|---|
| "Neocryl" B731 (isobutyl methacrylate, ex. Polyvinyl Chimie, Netherlands) | 5 |
| Propoxylated glycerol triacrylate ("Setalux" 2250) | 50 |
| Tripropylene glycol diacrylate | 35 |
| ITX | 5 |
| DMB | ·5 |
|  | 100 |

**Claims**

1. A radiation-curable and firable printing ink comprising a colouring material and a medium characterised in that the medium consists essentially of a substantially fully-polymerised thermoplastic resin, a radiation-curable diluent having a boiling point at atmospheric pressure of not less than about 150 degrees centigrade and a photoinitiator.

2. An ink according to claim 1 wherein the resin is solid at temperatures up to about 25°C.

3. An ink according to claim 1 or claim 2 wherein the resin is not less than about 80% volatilisable on heating to a temperature of 450°C in air.

4. An ink according to any preceding claim wherein the resin is an acrylic resin, a hydrocarbon resin, a ketone resin, a cellulose resin or a rosin derivative.

5. An ink according to claim 4 wherein the resin is acrylic and is a homopolymer selected from polymethylmethacrylate and polybutylmethacrylate, or a co-polymer of two or more monomers selected from methylmethacrylate, butylmethacrylate, methacrylic acid and ethyl acrylate.

6. An ink according to any of claims 1 to 5 wherein the diluent is resin-free.

7. An ink according to claim 6 wherein the diluent contains ethylenic unsaturation.

8. An ink according to claim 7 wherein the diluent comprises a monofunctional or polyfunctional acrylate.

9. An ink according to claim 7 wherein the diluent comprises a vinyl-containing compound selected from vinyl pyrrolidone, isobornyl acrylate, hexane diol diacrylate, triethylene glycol diacrylate, tripropylene glycol diacrylate, trimethylolpropane triacrylate and pentaerythritol triacrylate.

10. An ink according to claim 7 wherein the diluent contains an aliphatic ether linkage.

11. An ink according to claim 10 wherein the diluent comprises an alkoxylated derivative of a monofunctional or polyfunctional acrylate.

12. An ink according to any of claims 1 to 11 which contains from 40 to 85% by weight of colouring material, balance medium.

13. An ink according to any preceding claim in which the medium comprises from 1 to 80% by weight thermoplastic resin, from 15 to 95% by weight diluent, balance photoinitiator and optionally inessential additives.

14. A process for decorating a ceramic, vitreous or metallic substrate comprising applying a decoration in a radiation-curable printing ink, curing the ink by exposure to radiation and thereafter firing the decorated substrate, wherein the ink contains a colouring material and a medium which consists essentially of a substantially fully-polymerised thermoplastic resin, a radiation-curable diluent having a boiling point of atmospheric pressure of not less than about 150 degrees centigrade and a photoinitiator, the frit being molten at the peak firing temperature, and the resin and cured diluent being fugitive at temperatures lower than the temperature at which the frit begins to sinter.

15. A process according to claim 14 for applying a mask to a car windscreen, wherein a film of printing ink is applied by screen printing, the ink consisting of an enamel colour and a medium comprising a fully polymerised thermoplastic resin, a photoinitiator and a radiation-curable ethylenically-unsaturated diluent, the film is subjected to radiation to cure the diluent, and the windscreen carrying the cured film is subjected to a fast firing schedule in which the heating rate is at least 100°C per minute.

16. A process for decorating a ceramic, vitreous or metallic substrate by applying a decoration in a radiation-curable printing ink comprising a colouring material and a medium consisting essentially of a

6

substantially fully-polymerised thermoplastic resin, a radiation-curable diluent and a photoinitiator to a decalcomania substrate, curing the ink by exposure to radiation and thereafter transferring the decoration to the ceramic, vitreous or metallic substrate and firing the thus decorated substrate.

17. A process for making a decalcomania comprising applying a decoration to a decalcomania backing sheet and curing the said decoration by exposure to radiation, wherein the decoration is constituted by a printing ink comprising a colouring material and a medium consisting essentially of a substantially fully-polymerised thermoplastic resin, a radiation-curable diluent and a photoinitiator.

18. A decalcomania for applying a decoration to a ceramic, vitreous or metallic substrate, the decalcomania comprising a decalcomania backing sheet and a decoration layer, wherein the decoration layer is formed from a radiation-curable printing ink comprising a colouring material and a medium consisting essentially of a substantially fully-polymerised thermoplastic resin, a radiation-curable diluent and a photoinitiator, the decoration layer having been exposed to radiation to cure the printing ink.

**Patentansprüche**

1. Durch Strahlung aushärtbare und einbrennbare Druckfarbe, die einen färbenden Bestandteil und ein zusätzliches Mittel enthält, dadurch gekennzeichnet, daß das zusätzliche Mittel im wesentlichen aus einem vollständig polymerisierten thermoplastischen Harz, einem durch Strahlung aushärtenden Lösungsmittel mit einem Siedepunkt bei Atmosphärendruck von nicht niedriger als etwa 150°C und einem Fotoinitiator besteht.

2. Farbe nach Anspruch 1, bei der das Harz bei Temperaturen bis etwa 25°C fest ist.

3. Farbe nach Anspruch 1 oder Anspruch 2, bei der das Harz zu nicht weniger als etwa 80% flüchtig ist, wenn es in Luft auf eine Temperatur von 450°C erhitzt wird.

4. Farbe nach einem der vorausgehenden Ansprüche, bei der das Harz ein Acrylharz, ein Kohlenwasserstoffharz, ein Ketonharz, ein Zelluloseharz oder ein Harzderivat ist.

5. Farbe nach Anspruch 4, bei der das Harz ein Acrylharz und ein Homopolymer aus der Gruppe Polymethylmethacrylat und Polybutylmethacrylat oder ein Copolymer von zwei oder mehreren Monomeren aus der Gruppe Methylmethacrylat, Butylmethacrylat, Methacrylsäure und Ethylacrylat ist.

6. Farbe nach einem der Ansprüche 1 bis 5, bei der das Lösungsmittel harzfrei ist.

7. Farbe nach Anspruch 6, bei der das Lösungsmittel eine ungesättigte Äthylenverbindung enthält.

8. Farbe nach Anspruch 7, bei der das Lösungsmittel ein monofunktionales oder polyfunktionales Acrylat enthält.

9. Farbe nach Anspruch 7, bei der das Lösungsmittel eine vinylhaltige Verbindung enthält, die aus folgender Gruppe ausgewählt ist: Vinylpyrrolidon, Isobornylacrylat, Hexandioldiacrylat, Triäthylenglykoldiacrylat, Tripropylenglycoldiacrylat, Trimethylolpropantriacrylat und Pentaerythritoltriacrylat.

10. Farbe nach Anspruch 7, bei der das Lösungsmittel eine aliphatische Ätherbindung enthält.

11. Farbe nach Anspruch 10, bei der das Lösungsmittel ein alkoxyliertes Derivat eines mono- oder polyfunktionalen Acrylats enthält.

12. Farbe nach einem der Ansprüche 1 bis 11, die von 40 bis 85 Gew.% färbenden Bestandteil sowie als Rest das zusätzliche Mittel enthält.

13. Farbe nach einem der vorhergehenden Ansprüche, bei der das zusätzliche Mittel 1—80 Gew.% thermoplastisches Harz, 15 bis 95 Gew.% Lösungsmittel, als Rest Fotoinitiator und vorzugsweise unwesentliche Zusätze enthält.

14. Verfahren zum Dekorieren eines keramischen, glasartigen oder metallischen Substrates, bei dem eine Dekoration mit durch Strahlung aushärtender Druckfarbe aufgebracht wird, die Farbe mittels Strahlung ausgehärtet wird, danach das dekorierte Substrat gebrannt wird, wobei die Farbe einen färbenden Bestandteil und ein Zusatzmittel, das im wesentlichen aus einem vollständig polymerisierten thermoplastischen Harz, einem durch Strahlung aushärtenden Lösungsmittel, dessen Siedepunkt unter Atmosphärendruck nicht unter etwa 150°C liegt und einem Fotoinitiator besteht, und bei dem die Fritte bei der höchsten Einbrenntemperatur geschmolzen wird, und das Harz und das ausgehärtete Lösungsmittel bei einer Temperatur flüchtig sind, die niedriger ist als die Temperatur, bei der die Fritte zu sintern beginnt.

15. Vorrichtung nach Anspruch 14 zur Herstellung einer Maske auf der Windschutzscheibe eines Fahrzeuges, wobei ein Film aus Druckfarbe durch Siebdruck erzeugt wird, die aus einer Emaillefarbe und einem Zusatzmittel besteht, das ein vollständig polymerisiertes thermoplastisches Harz, einen Fotoinitiator und ein durch Strahlung aushärtendes, Äthylen-ungesättigtes Lösungsmittel enthält, wobei der Film einer Strahlung ausgesetzt wird, um das Lösungsmittel auszuhärten und wobei weiter die Windschutzscheibe mit dem ausgehärteten Film einem raschen Einbrennvorgang unterworfen wird, bei dem die Rate der Temperaturerhöhung bei mindestens 100°C je Minute liegt.

16. Verfahren zum Dekorieren eines keramischen, glasartigen oder metallischen Substrates durch Aufbringen einer Dekoration mit einer durch Strahlung härtenden Druckfarbe, die einen färbenden Bestandteil und ein Zusatzmittel, das im wesentlichen aus einem vollständig polymerisierten thermoplastischen Harz, einem durch Strahlung aushärtenden Lösungsmittel und einem Photoinitiator besteht, auf ein abzuziehendes Substrat, Aushärten der Farbe mittels einer Strahlung und anschließendes Übertragen der Dekoration auf das keramische, glasartige oder metallische Substrat sowie Brennen des auf diese Weise dekorierten Substrates.

17. Verfahren zur Herstellung einer Abziehdekoration, bei dem eine Dekoration einer abziehbaren Stützfolie zugeordnet und mittels einer Strahlung ausgehärtet wird, wobei die Dekoration von einer Druckfarbe gebildet wird, die einen färbenden Bestandteil und ein Zusatzmedium enthält, das im wesentlichen aus einem vollständig polymerisierten thermoplastischen Harz, einem durch Strahlung härtenden Lösungsmittel und einem Photoinitiator besteht.

18. Abziehdekoration für die Aufbringung einer Dekoration auf einem keramischen, glasartigen oder metallischen Substrat, wobei die Abziehdekoration eine Stützfolie für die Dekoration und eine Dekorationsschicht enthält, wobei die Dekorationsschicht von einer durch Strahlung aushärtenden Druckfarbe gebildet wird, die einen färbenden Bestandteil und ein Zusatzmittel enthält, das im wesentlichen aus einem vollständig polymerisierten thermoplastischen Harz, einem durch Strahlung aushärtendem Lösungsmittel und einem Photoinitiator besteht, wobei die Dekorationsschicht zum Aushärten der Druckfarbe einer Strahlung ausgesetzt wurde.

**Revendications**

1. Encre d'impression pouvant être durcie et soumise à une cuisson par irradiation, cette encre comprenant une matière colorante et un milieu, caractérisée en ce que ce milieu est constitué essentiellement d'une résine thermoplastique pratiquement polymérisée complètement, d'un diluant durcissable par irradiation ayant un point d'ébullition minimum d'environ 150°C à la pression atmosphérique, ainsi que d'un photo-initiateur.

2. Encre selon la revendication 1, dans laquelle la résine est solide à des températures allant jusqu'à environ 25°C.

3. Encre selon la revendication 1 ou 2, dans laquelle la résine n'est pas volatilisable à moins d'environ 80% lors d'un chauffage à une température de 450°C dans l'air.

4. Encre selon l'une quelconque des revendications précédentes, dans laquelle la résine est une résine acrylique, une résine hydrocarbonée, une résine cétonique, une résine de cellulose ou un dérivé de colophane.

5. Encre selon la revendication 4, dans laquelle la résine est une résine acrylique qui est un homopolymère choisi parmi le méthacrylate de polyméthyle et le méthacrylate de polybutyle, ou un copolymère de deux monomères ou plus choisi parmi le méthacrylate de méthyle, le méthacrylate de butyle, l'acide méthacrylique et l'acrylate d'éthyle.

6. Encre selon l'une quelconque des revendications 1 à 5, dans laquelle le diluant est exempt de résine.

7. Encre selon la revendication 6, dans laquelle le diluant contient une insaturation éthylénique.

8. Encre selon la revendication 7, dans laquelle le diluant comprend un acrylate monofonctionnel ou polyfonctionnel.

9. Encre selon la revendication 7, dans laquelle le diluant comprend un composé vinylique choisi parmi la vinyl-pyrrolidone, l'acrylate d'isobornyle, le diacrylate d'hexane-diol, le diacrylate de triéthylène-glycol, le diacrylate de tripropylèneglycol, le triacrylate de triméthylol-propane et le triacrylate de pentaérythritol.

10. Encre selon la revendication 7, dans laquelle le diluant contient une liaison éther aliphatique.

11. Encre selon la revendication 10, dans laquelle le diluant comprend un dérivé alcoxylé d'un acrylate monofonctionnel ou polyfonctionnel.

12. Encre selon l'une quelconque des revendications 1 à 11, cette encre contenant 40 à 85% en poids de matière colorante, le reste étant constitué du milieu.

13. Encre selon l'une quelconque des revendications précédentes, dans laquelle le milieu comprend 1 à 80% en poids de résine thermoplastique, 15 à 95% en poids de diluant, le reste étant constitué d'un photo-initiateur et d'additifs non essentiels facultatifs.

14. Procédé en vue de décorer un substrat céramique, vitreux ou métallique, ce procédé consistant à appliquer une décoration en une encre d'impression durcissable par irradiation, durcir l'encre par exposition à des radiations, puis soumettre le substrat décoré à une cuisson, l'encre contenant une matière colorante et un milieu constitué essentiellement d'une résine thermoplastique pratiquement polymérisée complètement, d'un diluant durcissable par irradiation ayant un point d'ébullition minimum d'environ 150°C à la pression atmosphérique, ainsi que d'un photo-initiateur, la fritte étant fondue à la température de cuisson maximale, tandis que la résine et le diluant durci sont volatils à des températures inférieures à celle à laquelle la fritte commence à fritter.

15. Procédé selon la revendication 14 en vue de l'application d'un masque à un pare-brise de véhicule automobile, procédé dans lequel une pellicule d'encre d'impression est appliquée par sérigraphie, l'encre étant constituée d'une couleur émail et d'un milieu comprenant une résine thermoplastique complètement polymérisée, un photo-initiateur et un diluant à insaturation éthylénique durcissable par irradiation, la pellicule étant soumise à des radiations en vue de durcir le diluant, tandis que le pare-brise comportant la pellicule durcie est soumis à un programme de cuisson rapide dans lequel la vitesse de chauffage est d'au moins 100°C par minute.

16. Procédé en vue de décorer un substrat céramique, vitreux ou métallique, ce procédé consistant à appliquer, à un substrat à décalcomanie, une décoration en une encre d'impression durcissable par irradiation comprenant une matière colorante et un milieu constitué essentiellement d'une résine thermoplastique pratiquement polymérisée complètement, d'un diluant durcissable par irradiation et d'un photo-initiateur, durcir l'encre par exposition à des radiations, puis transférer la décoration au substrat céramique, vitreux ou métallique et, enfin, soumettre le substrat ainsi décoré à une cuisson.

17. Procédé en vue de former une décalcomanie, ce procédé consistant à appliquer une décoration à une feuille support à décalcomanie, puis durcir la décoration par exposition à des radiations, cette décoration étant constituée d'une encre d'impression comprenant une matière colorante et un milieu constitué essentiellement d'une résine thermoplastique pratiquement polymérisée complètement d'un diluant durcissable par irradiation et d'un photo-initiateur.

18. Décalcomanie en vue de l'application d'une décoration à un substrat céramique, vitreux ou métallique, cette décalcomanie comprenant une feuille support à décalcomanie et une couche de décoration, la couche de décoration étant formée à partir d'une encre d'impression durcissable par irradiation comprenant une matière colorante et un milieu constitué essentiellement d'une résine thermoplastique pratiquement polymérisée complètement, d'un diluant durcissable par irradiation et d'un photo-initiateur, la couche de décoration ayant été exposée à des radiations en vue de durcir l'encre d'impression.